# EUROPÄISCHE PATENTSCHRIFT

(11) **EP 1 078 569 B1**
(45) Veröffentlichungstag und Bekanntmachung des Hinweises auf die Patenterteilung: **20.08.2003**
(21) Anmeldenummer: 00115395.6
(22) Anmeldetag: 17.07.2000
(51) Int. Cl.: A01K 1/015, A01K 31/04, A01K 1/01

(54) **Vorrichtung zur Bodenabdeckung eines Stallraums**
Device for covering the floor of a stable
Appareillage pour couvrire le fond d'un étable

(30) Priorität: 12.08.1999 DE 29914165 U
(43) Veröffentlichungstag der Anmeldung: 28.02.2001
(73) Patentinhaber: Firma Gustav Wilms, D-49152 Bad Essen (DE)
(72) Erfinder: Wilms, Heinrich, 49328 Melle (DE)
(74) Vertreter: Busse & Busse Patentanwälte

(56) Entgegenhaltungen:
- GB-A- 360 138
- US-A- 3 119 374
- US-A- 3 274 973

## Beschreibung

Die Erfindung betrifft eine Vorrichtung zur aufstreuartigen Bodenabdeckung eines Stallraums für Nutztiere, insbesondere Geflügel.

Es ist bekannt, Stallräume für Nutztiere aller Art mit einer Aufstreu als Bodenabdeckung zu versehen. Als Aufstreumaterial wird üblicherweise Stroh verwendet, es kommen aber auch Holzpartikel z.B. in Form von Holzspänen oder Holzmehl zu diesem Zweck zum Einsatz. Die Auf streu nimmt die Tierexkremente auf und wird in regelmäßigen Abständen erneuert. Das die Tierexkremente enthaltende Aufstreumaterial wird in der Regel als Mist zur Felddüngung verwendet.

Bei dieser bekannten Art der Bodenabdeckung wird die Aufstreu üblicherweise von Hand unter Zurhilfenahme einfacher Arbeitsmittel aufgebracht, was zum Teil auch für das Entmisten des Stalles gilt, obwohl für die Stallreinigung grundsätzlich auch Kotschieber als mechanische Reinigungsgeräte bekannt sind.

Der Erfindung liegt die Aufgabe zugrunde, eine Vorrichtung zur aufstreuartigen Bodenabdeckung eines Stallraums für Nutztiere, insbesondere Geflügel, zu schaffen, die die Möglichkeit einer artgerechten, hygienischen Aufstallung der Nutztiere bietet und zugleich einen wirtschaftlichen Betrieb des Stalles unter weitgehender Vermeidung manueller Eingriffe ermöglicht.

Diese Aufgabe wird nach der Erfindung dadurch gelöst, daß die Vorrichtung eine dem Stallraum einenends vorgeordnete Abwickelstation für zumindest eine eine Schicht lose aufgestreuter Holzpartikel tragende Substratbahn umfaßt, daß die vor ihrem Eintritt in den Stallraum von einer Eingangsvorratsrolle der Abwickelstation abgewickelte Substratbahn mit einer vorbestimmten Geschwindigkeit in Bahnlängsrichtung durch den Stallraum mit Bodenberührung hindurchförderbar ist, wobei die Oberseite der Substratbahn mit ihrer Holzpartikelschicht eine zugleich Tierexkremente aufnehmende Aufenthaltsfläche des Stallbodens für die Tiere bildet, und daß, dem Stallraum anderenends nachgeordnet, eine Aufwickelstation mit einer Ausgangsvorratsrolle vorgesehen ist, auf die die Substratbahn nach ihrem Austritt aus dem Stallraum wieder aufwickelbar ist.

Bei Einsatz der erfindungsgemäßen Vorrichtung bildet die die Schicht lose aufgestreuter Holzpartikel tragende Substratbahn eine artgerechte Aufenthaltsfläche für insbesondere Geflügel, aber auch andere, vorwiegend kleinere Nutztiere, wie Kaninchen, Lämmer, Ferkel und dgl. Die Holzpartikel auf der Substratbahn nehmen die Tierexkremente auf und umhüllen sie, so daß Geruchsbelästigungen weitgehend vermieden sind. Dadurch, daß außerdem die Substratbahn mit ihrer Holzpartikelschicht mit einer vorbestimmten Geschwindigkeit durch den Stallraum bewegt wird, kann eine kontinuierliche Entsorgung der tierexkrementhaltigen Holzpartikelschicht in dem Maße erfolgen, wie die Substratbahn den Stallraum verläßt. Die Durchlaufgeschwindigkeit der Substratbahn durch den Stallraum kann dabei in Abhängigkeit von der Belastung der Holzpartikelschicht durch Tierexkremente eingestellt werden und z.B. etwa 5 cm in der Stunde betragen, so daß der Aufenthalt der Tiere auf der von der Substratbahn dargebotenen Aufenthaltsfläche durch die Bahnbewegung nicht gestört wird.

Dies kann in einem praktischen Fall, z.B. bei der Aufzucht von Küken und Junghennen, bedeuten, daß die Durchlaufzeit für einen gegebenen Bahnabschnitt durch den Stallraum etwa 3 bis 4 Tage, in Abhängigkeit von der Stallänge, betragen kann, nächtliche Stillstandszeiten während der Ruhephasen der Tiere bei abgeschaltetem Licht eingeschlossen. Durch die über weite Strecken des Tages kontinuierliche Abfuhr der tierexkrementhaltigen Holzpartikelschicht wird einer Bakterienbildung entgegengewirkt, so daß ein hohes Maß an Stallhygiene erreicht ist. Durch die Abwickelstation und die Aufwickelstation mit Eingangsvorratsrolle oder -rollen bzw. Ausgangsvorratsrolle oder -rollen ist ein mechanischer Betrieb gewährleistet, der ein manuelles Eingreifen weitgehend überflüssig macht. Dies gilt auch für die Holzpartikelschicht, die nicht von Hand im Stallraum auf die Substratbahn aufgebracht werden muß, sondern bereits als lose Aufstreu in den Windungen der Eingangsvorratsrolle in der Abwickelstation, bei Verwendung einer insoweit im einsatzbereiten Zustand angelieferten Substratbahn, vorhanden sein kann.

In weiterer Ausgestaltung der Erfindung ist jedoch vorzugsweise zwischen der Abwickelstation für die Eingangsvorratsrolle und dem Eintritt der Substratbahn in den Stallraum eine Dosiereinrichtung zum Aufstreuen der Holzpartikel auf die Oberseite der Substratbahn angeordnet.

Im Rahmen der Erfindung ist ferner vorgesehen, daß die Aufwickelstation für die Ausgangsvorratsrolle mit einer Abschabeinrichtung, z.B. in Form eines Abstreifers oder einer Bürste, für die tierexkrementhaltige Holzpartikelschicht der Substratbahn versehen ist, so daß vor dem Aufwickeln eine Reinigung der Substratbahn erfolgt. Zusätzlich oder alternativ kann für das Reinigen der Substratbahn eine Wassersprühvorrichtung vorgesehen sein. Die in dieser Weise von der gereinigten Substratbahn gebildete Ausgangsvorratsrolle kann als Eingangsvorratsrolle in der Abwickelstation wieder verwendet werden, wodurch sich ein hohes Maß an Wirtschaftlichkeit ergibt.

Dabei ist vorzugsweise in der Aufwickelstation unterhalb der Ausgangsvorratsrolle eine Auffangeinrichtung für die von der Substratbahn abgeschabten Holzpartikel und Tierexkremente angeordnet, die es ermöglicht, das Gemisch aus Holzpartikeln und Tierexkrementen als Dünger weiter zu verwenden oder zunächst zu kompostieren.

Die Substratbahn ist zweckmäßig von einer zumindest oberseitig kunststoffbeschichteten Papierbahn, einer Kunststoffolie, einem Gewebeband oder dgl. flachem Trägermaterial gebildet, das die erforderliche Zugfestigkeit und Kratzfestigkeit bei der Beanspruchung durch die aufgestallten Tiere aufweist.

Die Holzpartikel bestehen vorzugsweise aus Holzschnitzeln, -spänen, -mehl und/oder -wolle bzw. aus einem davon gebildeten Gemisch. Dabei kann den Holzpartikeln, je nach den Lebensgewohnheiten der aufgestallten Tiere, auch anderes Material, z.B. Sand, beigemischt sein. Ferner können der Holzpartikelschicht Futterstoffe, insbesondere von körniger Beschaffenheit, bei einem Einsatz in einem Geflügelstall beigemischt sein.

Es wurde gefunden, daß von den Holzpartikeln auf der Substratbahn eine antibakterille Wirkung durch Abtöten der tierexkrementbedingt vorhandenen Bakterien, z.B. E.coli, ausgeht. Dabei wurde weiter gefunden, daß die antibakterielle Wirkung dadurch noch verbessert werden kann, daß die Holzpartikel mit einem Netzmittel (Tensid) und/oder einem Fettlöser imprägniert sind. Durch Netzmittel oder Tenside in Lösung wird die Oberflächen- bzw. Grenzflächenspannung von Flüssigkeiten herabgesetzt, so daß diese in die Oberflächen der Holzpartikel eindringen und sie unter Verdrängung der Luft durchtränken und benetzen können. Die dadurch an die Holzpartikel gebundenen oberflächenaktiven Stoffe haben bei einem Bakterienbefall durch den Kontakt mit den Tierexkrementen ihrerseits eine bakterizide Wirkung durch Zerstörung der Zellmembran der Bakterien aufgrund der die Grenzflächen- bzw. Oberflächenspannung herabsetzenden Substanzen. Durch den ggf. zusätzlich vorhandenen Fettlöser wird diese Wirkung unterstützt. Ferner wurde bei Untersuchungen verschiedener Nadelhölzer und Laubhölzer gefunden, daß Holzpartikeln von Hölzern aus der Familie der Pinaceae ihrerseits sehr gute antibakterielle Eigenschaften besitzen, wobei unter diesen eine Abtötung der Bakterien am schnellten bei Kiefern- und Lärchenholzpartikeln zu beobachten ist.

Es versteht sich im übrigen, daß bei größeren Stallanlagen mehrere, oberseitig die lose aufgestreute Holzpartikelschicht tragende Substratbahnen vorgesehen sind, jeweils mit einer Bahnbreite von etwa 1,5 bis 2 mm, die in der Abwickelstation von einer entsprechenden Anzahl von Eingangsvorratsrollen abwickelbar und in der Aufwickelstation auf entsprechende Ausgangsvorratsrollen aufwickelbar sind, um so die gesamte Stallbreite abzudecken. Die erfindungsgemäße Vorrichtung ist insoweit auch für Großstallanlagen verwendbar.

Weitere Merkmale und Vorteile der Erfindung ergeben sich aus den Unteransprüchen und der nachstehenden Beschreibung in Verbindung mit der Zeichnung, in der ein Ausführungsbeispiel des Gegenstands der Erfindung schematisch veranschaulicht ist. In der Zeichnung zeigt:
- Fig. 1: einen Vertikalschnitt durch eine erfindungsgemäße Vorrichtung zur aufstreuartigen Bodenabdeckung eines Stallraums für Nutztiere und
- Fig. 2: einen Horizontalschnitt durch die Vorrichtung nach Fig. 1.

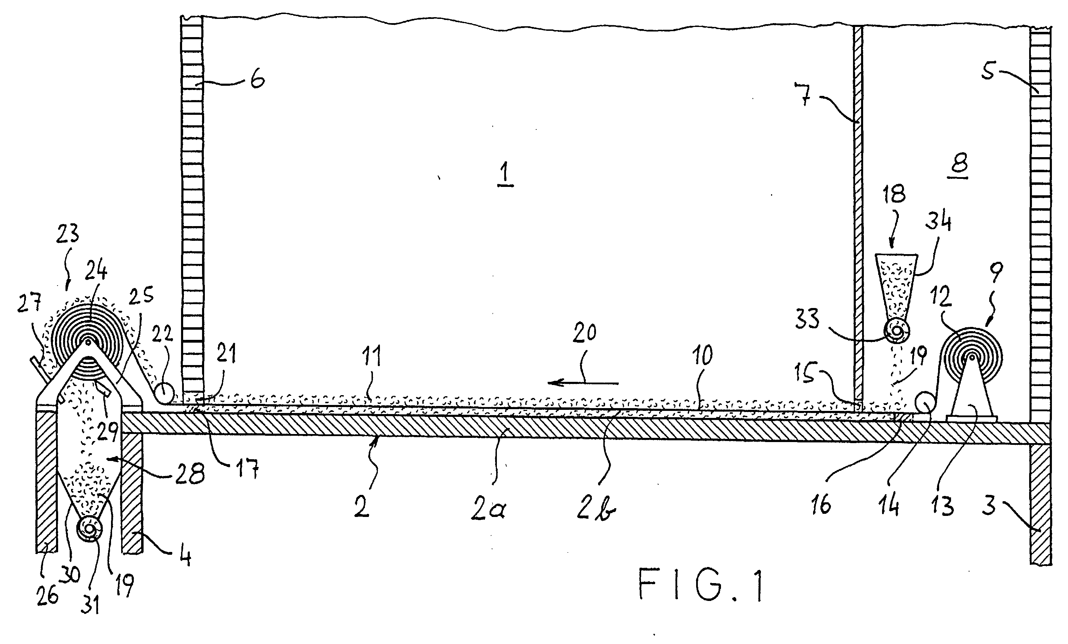

Wie sich zunächst aus Fig. 1 ergibt, umfaßt ein als Ganzes mit 1 bezeichneter Stallraum für Nutztiere, insbesondere Geflügel, einen Stallboden 2, der auf Fundamentwänden 3 und 4 abgestützt ist. Der Stallboden 2 umfaßt eine Bodenplatte 2a, die wie die Fundamentwände 3 und 4 beispielsweise aus Beton besteht. Über der Fundamentwand 3 befindet sich eine Stallwand 5 und oberhalb der Fundamentwand 4, mit Versatz zum Stallraum 1 hin, eine Stallwand 6. Zwischen diesen befindet sich eine Trennwand 7, die zusammen mit der Stallwand 5 einen Geräteraum 8 von dem der Aufstallung der Tiere dienenden Stallraum 1 abgrenzt.

Im Geräteraum 8 ist eine Abwickelstation 9 für zumindest eine Substratbahn 10 angeordnet, die eine Schicht 11 lose aufgestreuter Holzpartikel 19 trägt. Die Substratbahn 10 wird von einer Eingangsvorratsrolle 12 abgewickelt, die in einem Lagerbock 13 drehbar gelagert ist, und über eine Leitwalze 14 dem Stallraum 1 in Bodenhöhe zugeführt. Die Substratbahn 10 tritt durch eine Öffnung 15 in der Trennwand 7 über einer Ausgleichsschicht 2b ein, die zwischen eingangs- und ausgangsseitig auf der Bodenplatte 2a aufliegenden Lehren auf die Bodenplatte 2a aufgebracht ist und den Stallboden 2 vervollständigt. Die Schicht 2b besteht z.B. ihrerseits aus Holzpartikeln oder einer Schicht aus einem anderen Material mit geringem Reibungswiderstand, das der Förderbewegung der Substratbahn 10 in Laufrichtung 20 durch den Stallraum 1 bei ihrem Gleiteingriff mit der Schicht 2b keinen nennenswerten Widerstand entgegensetzt.

Im Geräteraum 8 ist außerdem zwischen der Abwickeltstation 9 und der Trennwand 7 eine Dosiereinrichtung 18 zum Aufstreuen der Holzpartikel 19 angebracht, die die Schicht 11 auf der Oberseite der Substratbahn 10 bilden.

Die Substratbahn 10 verläßt mit ihrer nach Durchlaufen durch den Stallraum 1 in Laufrichtung 20 nun Tierexkremente enthaltenden Holzpartikelschicht 11 den Stallraum 1 durch eine Öffnung 21 in der Stallwand 6 oberhalb der Lehre 17, um zur Stallraumaußenseite zu gelangen und über eine Leitwalze 22 in einer Aufwickelstation 23 außerhalb der Stallwand 6 auf eine Ausgangsvorratsrolle 24 aufgewickelt zu werden.

Die Ausgangsvorratsrolle 24 ist in einem Lagerbock 25 drehbar gelagert und in nicht näher dargestellter Weise mit einem Wickelmotor zum Vorziehen der Substratbahn 10 in Laufrichtung 20 ausgerüstet. Der Lagerbock 25 ist über die Bodenplatte 2a auf der Fundamentwand 4 und einer zu dieser parallelen Fundamentwand 26 abgestützt. Im Lagerbock 25 sind ferner eine Leitschiene 27 für die Holzpartikelschicht 10 zu deren Hinführung zu einer unteren Auffangeinrichtung 28 und eine Abschabeinrichtung 29 in Form eines über die Länge der Vorratsrolle 24 an deren Außenumfang angreifenden Schabemessers angebracht.

Mittels der Abschabeinrichtung 29 werden die abgeschabten Holzpartikel 19 und Tierexkremente in der Auffangeinrichtung 28 gesammelt, um gemeinsam abgeführt und weiterverwendet zu werden, während die abgeschabte und gesäuberte Ausgangsvorratrsolle 24 nach ihrer Vollendung durch Umwechseln auf den Lagerbock 13 in der Abwickelstation 9 erneut als Eingangsvorratsrolle verwendet werden kann.

Die Auffangeinrichtung 28 ist von einem Sammelbehälter 30 im Raum zwischen den Wänden 4 und 26 gebildet, der sich an seinem unteren Ende konisch verjüngt und mit einer Austrageinrichtung 31 in Form einer Förderschnecke versehen ist. Mittels der Austrageinrichtung 31 können die mit Tierexkrementen durchmischten Holzpartikel 19 aus dem Stallbereich für eine Weiterverwendung herausgefördert werden.

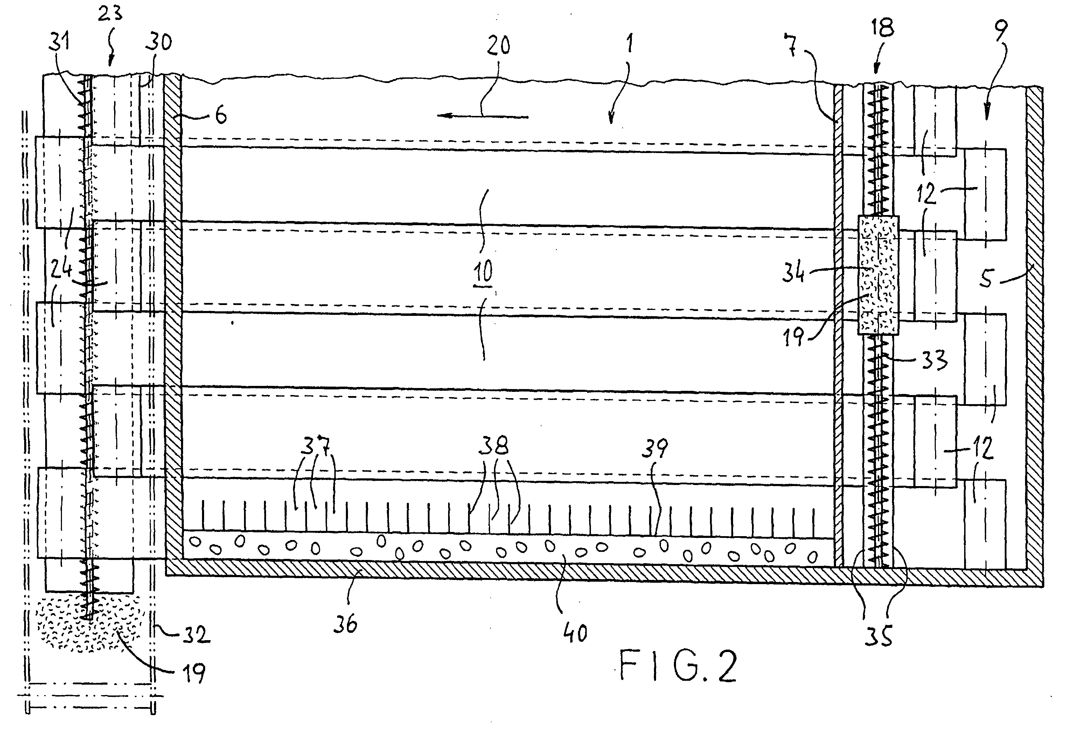

Anstelle des Sammelbehälters 30 kann nach einer in Fig. 2 strichpunktierit dargestellten Abwandlung als Auffangvorrichtung 28 ein Förderband 32 verwendet werden, das in einer Ebene unterhalb der Ausgangsvorratsrolle 24, etwa in Höhe des Stallbodens 2, abgestützt ist, um, ausgerüstet mit einem nicht näher dargestellten Antrieb, die mit Tierexkrementen vermischten Holzpartikel 19 aus dem Stallbereich einer Weiterverwendung, z.B. unter Zwischenschaltung geeigneter Transportfahrzeuge, zuzuführen.

Gemäß dem in der Zeichnung dargestellten Ausführungsbeispiel umfaßt die Abwickelstation 9 mehrere Eingangsvorratsrollen 12 für eine entsprechende Anzahl von Substratbahnen 10, die, wie Fig. 2 zeigt, mit Längsrandüberlappung in Laufrichtung 20 durch den Stallraum 1 gefördert werden, um auch quer zur Laufrichtung 20 durch die Substratbahnen 10 eine ununterbrochene Aufenthaltsfläche für die Tiere darzubieten. Die Eingangsvorratsrollen 12 sind zu diesem Zweck, wie Fig. 2 ebenfalls zeigt, in Bahnlängsrichtung gestaffelt und in Bahnquerrichtung zur Erzeugung der gewünschten Längsrandüberlappung zueinander versetzt.

Die Dosiereinrichtung 18 umfaßt hier eine quer über sämtliche Substratbahnen 10 reichende Dosierschnecke 33 und einen Dosierbehälter 34, der sich nach unten konisch verjüngt und quer zur Laufrichtung 20 der Substratbahnen 10 auf parallelen Führungsschienen 35 verschieblich ist und so wahlweise in eine Dosierposition oberhalb einer ausgewählten Substratbahn 10 gebracht werden kann, um, nach Öffnung einer unteren Verschlußeinrichtung, Holzpartikel 19 über den ihm zugeordneten Abschnitt der Förderschnecke 33 auf die gewählte Substratbahn 10 aufzustreuen.

Dies ermöglicht es, auf einzelnen Substratbahnen 10 Holzpartikel 19 in einer anderen, z.B. größeren Schichtdicke aufzustreuen, um unterschiedlichen Benutzungsverhältnissen der Aufenthaltsfläche der Tiere Rechnung zu tragen. Es versteht sich, daß anstelle des verfahrbaren Dosierbehälters 34 ein in Querrichtung durchlaufender Dosierbehälter für einen gleichmäßigen Holzpartikelauftrag auf sämtliche Substratbahnen 10 vorgesehen sein kann.

In der Aufwickelstation 23 werden die einzelnen Substratbahnen 10 jeweils auf eine eigene Ausgangsvorratsrolle 24 aufgewickelt, wobei jede Ausgangsvorratsrolle 24 mit einer eigenen Antriebseinrichtung für den Bahnvorzug versehen ist, mit der Möglichkeit, einzelne Substratbahnen 10, je nach der Belastung mit Tierexkrementen mit höherer Vorzuggeschwindigkeit bei stärkerer Belastung gegenüber solchen Substratbahnen 10 mit geringerer Belastung durch den Stallraum 1 hindurchzufördern.

Selbstverständlich besteht grundsätzlich auch die Möglichkeit, sämtliche Ausgangsvorratsrollen 24 in der Aufwickelstation 23 mit einem gemeinsamen Bahnvorzug auszustatten, der sämtlichen Substratbahnen 10 eine einheitliche Vorzuggeschwindigkeit durch den Stallraum 10 vermittelt. Ferner ist, wie eingangs bereits beschrieben, jede Ausgangsvorratsrolle 24 mit einer eigenen Abschabeinrichtung 29 versehen.

Die Auffangeinrichtung 28 erstreckt sich zur Bahnlaufrichtung 20 über sämtliche Substratbahnen 10 und ist allen Ausgangsvorratsrollen 24 als gemeinsame Einrichtung, entweder in Form des Sammelbehälters 30 oder in Form des Förderbandes 32, zugeordnet.

Im übrigen kann der Stallraum 1 mit den üblichen Einrichtung zur Fütterung bzw. zur Versorgung der Tiere mit Trinkwasser versehen sein. Bei einem Einsatz der Vorrichtung in einen Legehennenstall können entlang einer Stallängswand Legenester 37 vorgesehen sein, die von Gefachwänden 38 gebildet sind, die mit einer ihnen gemeinsamen Rückwand 39 an den Stallwänden 6 und 7 kurz oberhalb der Holzpartikelschicht 10 befestigt sind, um den Durchlauf der unter den Nestern 37 befindlichen Substratbahn 10 mit ihrer Holzpartikelschicht 11 nicht zu behindern. Um den Legevorgang nicht zu stören, kann die Substratbahn 10 unterhalb der Nester 37 mit einer sehr geringen Durchlaufgeschwindigkeit bewegt werden. Dies ist auch unter hygienischen Gesichtspunkten vertretbar, da erfahrungsgemäß im Legebereich der Hennen kaum Exkremente anfallen. An die Legenester 37 schließt sich nach außen bei diesem Beispiel ein Eiertransportband 40 an, auf das die Eier z.B. durch ein geringes Gefälle der entsprechenden Substratbahn 10 zur Stallwand 36 hin gelangen und das die Eier in nicht näher dargestellter Weise, ggf. unter Zwischenschaltung weiterer Förder- bzw. Sortierbänder, abtransportiert.

## Patentansprüche

1. Vorrichtung zur aufstreuartigen Bodenabdeckung eines Stallraums für Nutztiere, insbesondere Geflügel, **dadurch gekennzeichnet, daß** sie eine dem Stallraum (1) einenends vorgeordnete Abwickelstation (9) für zumindest eine eine Schicht (11) lose aufgestreuter Holzpartikel (19) tragende Substratbahn (10) umfaßt, daß die vor ihrem Eintritt in den Stallraum (1) von einer Eingangsvorratsrolle (12) der Abwickelstation (9) abgewickelte Substratbahn (10) mit einer vorbestimmten Geschwindigkeit in Bahnlängsrichtung durch den Stallraum (1) mit Bodenberührung hindurchförderbar ist, wobei die Oberseite der Substratbahn (10) mit ihrer Holzpartikelschicht (11) eine zugleich Tierexkremente aufnehmende Aufenthaltsfläche des Stallbodens (2) für die Tiere bildet, und daß, dem Stallraum (1) anderenends nachgeordnet, eine Aufwickelstation (23) mit einer Ausgangsvorratsrolle (24) vorgesehen ist, auf die die Substratbahn (10) nach ihrem Austritt aus dem Stallraum (1) wieder aufwickelbar ist.

2. Vorrichtung nach Anspruch 1, **dadurch gekennzeichnet, daß** die Substratbahn (10) von einer zumindest oberseitig kunststoffbeschichteten Papierbahn, einer Kunststoffolie, einem Gewebeband oder dgl. flachem Trägermaterial gebildet ist.

3. Vorrichtung nach Anspruch 1 oder 2, **dadurch gekennzeichnet, daß** die Holzpartikel (19) von Holzschnitzeln, -spänen, -mehl und/oder -wolle gebildet sind.

4. Vorrichtung nach einem der Ansprüche 1 bis 3, **dadurch gekennzeichnet, daß** den Holzpartikeln (19) Sand beigemischt ist.

5. Vorrichtung nach einem der Ansprüche 1 bis 4, **dadurch gekennzeichnet, daß** den Holzpartikeln (19), insbesondere körnige, Futterstoffe beigemischt sind.

6. Vorrichtung nach einem der Ansprüche 1 bis 5, **dadurch gekennzeichnet, daß** die Holzpartikel (19) mit einem Netzmittel und/oder einem Fettlöser imprägniert sind.

7. Vorrichtung nach einem der Ansprüche 1 bis 6, **dadurch gekennzeichnet, daß** die Holzpartikel (19) von Hölzern aus der Familie der Pinaceae, insbesondere Kiefer und Lärche, gebildet sind.

8. Vorrichtung nach einem der Ansprüche 1 bis 7, **dadurch gekennzeichnet, daß** zwischen der Abwickelstation (9) für die Eingangsvorratsrolle (12) und dem Eintritt der Substratbahn (10) in den Stallraum (1) eine Dosiereinrichtung (18) zum Aufstreuen der Holzpartikel (19) auf die Oberseite der Substratbahn (10) angeordnet ist.

9. Vorrichtung nach einem der Ansprüche 1 bis 8, **dadurch gekennzeichnet, daß** die Aufwickelstation (23) für die Ausgangsvorratsrolle (24) mit einer Abschabeinrichtung (29) für die tierexkrementhaltige Holzpartikelschicht (11) der Substratbahn (10) versehen ist.

10. Vorrichtung nach Anspruch 9, **dadurch gekennzeichnet, daß** in der Aufwickelstation (23) unterhalb der Ausgangsvorratsrolle (24) eine Auffangeinrichtung (28) für die von der Substratbahn (10) abgeschabten Holzpartikel (19) und Tierexkremente angeordnet ist.

11. Vorrichtung nach Anspruch 10, **dadurch gekennzeichnet, daß** die Auffangeinrichtung (28) von einem Sammelbehälter (30) mit einer Austrageinrichtung (31) für die aufgefangenen Holzpartikel (19) und Tierexkremente gebildet ist.

12. Vorrichtung nach Anspruch 10, **dadurch gekennzeichnet, daß** die Auffangeinrichtung (28) von einem in einer Ebene unterhalb der Ausgangsvorratsrolle (24) abgestützten Förderband (32) gebildet ist.

13. Vorrichtung nach einem der Ansprüche 1 bis 12, **dadurch gekennzeichnet, daß** sie mehrere nebeneinander durch den Stallraum (1) verlaufende, oberseitig die lose aufgestreute Holzpartikelschicht (11) tragende Substratbahnen (10) umfaßt, die in der Abwickelstation (9) von einer entsprechenden Anzahl von Eingangsvorratsrollen (12) abwickelbar sind.

14. Vorrichtung nach den Ansprüchen 8 und 13, **dadurch gekennzeichnet, daß** die Dosiereinrichtung (18) einen quer zur Bahnlängsrichtung bewegbaren Dosierbehälter (34) umfaßt, der wahlweise in eine Dosierposition oberhalb einer jeden der Substratbahnen (10) verstellbar ist.

15. Vorrichtung nach Anspruch 13 oder 14, **dadurch gekennzeichnet, daß** die Substratbahnen(10) in der Aufwickelstation (23) jeweils auf eine eigene Ausgangsvorratsrolle (24) aufwickelbar sind und die Aufwickelstation (23) eine Abschabeinrichtung (29) für jede Ausgangsvorratsrolle (24) umfaßt.

16. Vorrichtung nach den Ansprüchen 10 und 15, **dadurch gekennzeichnet, daß** sich die Auffangeinrichtung (28) quer zur Bahnlängsrichtung der Substratbahnen (10) erstreckt und allen Ausgangsvorratsrollen (24) als gemeinsame Einrichtung zugeordnet ist.

## Claims

1. Device for litter-type covering of a stall for domestic animals, particularly poultry, **characterised in that** it includes an unwinding station (9) arranged at one end of the stall (1) for at least one layer (11) of substrate sheet (10) carrying loosely strewn wood particles (19), that the substrate sheet (10), unwound from a supply roller (12) of the unwinding station (9) before entry into the stall (1), can be conveyed in contact with the floor through the stall (1) in the lengthwise direction of the sheet at a predetermined speed, with the upper side of the substrate sheet (10) with its layer of wood particles (11) at the same time forming a collecting surface of the stall floor (2) for the animals to take animal excrement, and that an unwinding station (23) with a discharge roller (24) is arranged at the other end of the stall (1) onto which the substrate sheet (10) can be rewound after it leaves the stall (1).

2. Device in accordance with claim 1, **characterised in that** the substrate sheet (10) consists at least on the upper side of plastic-coated paper sheet, plastic sheeting, a fabric sheet or similar flat carrier material.

3. Device in accordance with claim 1 or 2, **characterised in that**, the wood particles (19) are formed from wood shavings, woodchips, wood dust and/or wood wool.

4. Device in accordance with one of claims 1 to 3, **characterised in that** sand is mixed with the wood particles (19).

5. Device in accordance with one of claims 1 to 4, **characterised in that** fodder, particularly granular, is added to the wood particles (19).

6. Device in accordance with one of claims 1 to 5, **characterised in that** the wood particles (19) are impregnated with wetting agent and/or a grease solvent.

7. Device in accordance with one of claims 1 to 6, **characterised in that** the wood particles (19) are formed from timber from the pinaceae family, particularly pine and larch.

8. Device in accordance with one of claims 1 to 7, **characterised in that** a dosing device (18) to spread the wood particles (19) on the upper side of the of the substrate sheet (10) is arranged between the unwinding station (9) for the supply roller (12) and the entry of the substrate sheet (10) into the stall (1).

9. Device in accordance with one of claims 1 to 8, **characterised in that** the winding station (23) for the discharge roller (24) is provided with a scraping device (29) for the wood particle layer (11), containing animal excrement, of the substrate sheet (10).

10. Device in accordance with claim 9, **characterised in that** in the winding station (23) a collector device (28) for the wood particles (19) and animal excrement scraped off the substrate sheet (10) is arranged underneath the discharge roller (24).

11. Device in accordance with claim 10, **characterised in that** the collector device (28) consists of a collector tank (30) with a spreading device (31) for the collected wood particles (19) and animal excrement.

12. Device in accordance with claim 10, **characterised in that** the collecting device (28) is formed by a conveyor belt (32) supported in a plane underneath the discharge roller (24).

13. Device in accordance with one of claims 1 to 12, **characterised in that** it consists of several adjacent substrate sheets (10) passing through the stall (1) carrying the loosely spread wood particle layer (11) on the upper side, which substrate sheets can be unwound in the unwinding station (9) by a corresponding number of supply rollers (12).

14. Device in accordance with one of claims 8 and 13, **characterised in that** dosing device (18) has a dosing tank (34) that can be moved transversely relative to the lengthwise direction of the sheet, and can be adjusted to a dosing position above any one of the substrate sheets (10) as required.

15. Device in accordance with claim 13 or 14, **characterised in that** the substrate sheets (10) in the winding station (23) can each be wound on its own discharge roller (24) and the winding station (23) includes a scraping device (29) for each discharge roller (24).

16. Device in accordance with claims 10 and 15, **characterised in that** the collecting device (28) extends crosswise relative to the lengthwise direction of the substrate sheets (10) track and is assigned to all discharge rollers (24) as a common device.

## Revendications

1. Dispositif permettant de recouvrir, en la saupoudrant, une étable pour animaux utiles, en particulier la volaille,
**caractérisé en ce qu'**
il comprend une station dérouleuse (9), placée en amont à une extrémité de l'étable (1) pour au moins une bande de substrat (10) portant une couche (11) de particules de bois (19) saupoudrées en vrac la bande de substrat (10) déroulée, avant l'entrée du dispositif dans l'étable (1), à partir d'un rouleau de réserve d'entrée (12) de la station dérouleuse (9) traverse à une vitesse prédéfinie l'étable (1) dans le sens de sa longueur de bande tout en restant en contact avec le sol, la face supérieure de la bande de substrat (10) avec sa couche de particules de bois (11) formant en même temps pour le sol de l'étable (2) des animaux une surface de rétention pour les excréments d'animaux, et une station enrouleuse (23) placée en aval à l'autre extrémité de l'étable (1) est équipée d'un rouleau de reprise en sortie (24), sur lequel la bande de substrat (10) est à nouveau enroulée, après sa sortie de l'étable (1).

2. Dispositif selon la revendication 1,
**caractérisé en ce que**
la bande de substrat (10) est composée d'une bande de papier dont la face supérieure comporte au moins une couche de plastique, une feuille plastique, un tissu ou un matériau de support plat similaire.

3. Dispositif selon la revendication 1 ou 2,
**caractérisé en ce que**
les particules de bois (19) sont composées de rognures de bois, copeaux de bois, farine de bois et/ou de laine de bois.

4. Dispositif selon l'une des revendications 1 à 3,
**caractérisé en ce que**
les particules de bois (19) sont mélangées à du sable.

5. Dispositif selon l'une des revendications 1 à 4,
**caractérisé en ce qu'**
on mélange aux particules de bois (19) du fourrage en particulier en grains.

6. Dispositif selon l'une des revendications 1 à 5,
**caractérisé en ce que**
les particules de bois (19) sont imprégnées d'un agent mouillant et/ou d'un solvant de graisse.

7. Dispositif selon l'une des revendications 1 à 6,
**caractérisé en ce que**
les particules de bois (19) sont composées de bois de la famille des pinacés, en particulier de pins sylvestres et de mélèzes.

8. Dispositif selon l'une des revendications 1 à 7,
**caractérisé en ce qu'**
un dispositif de dosage (18) est placé entre la station dérouleuse (9) du rouleau de réserve d'entrée (12) et l'entrée de la bande de substrat (10) dans l'étable (1), afin de saupoudrer les particules de bois (19) sur la face supérieure de la bande de substrat (10).

9. Dispositif selon l'une des revendications 1 à 8,
**caractérisé en ce que**
la station enrouleuse (23) du rouleau de reprise en sortie (24) est composée d'un racloir (29) pour la couche de particules de bois (11) contenant des excréments d'animaux de la bande de substrat (10).

10. Dispositif selon la revendication 9,
**caractérisé en ce qu'**
un collecteur (28) est placé dans la station enrouleuse (23), sous le rouleau de reprise en sortie (24), pour les particules de bois (19) de la bande de substrat (10) raclées et les excréments d'animaux.

11. Dispositif selon la revendication 10,
**caractérisé en ce que**
le collecteur (28) est composé d'un réservoir (30) équipé d'un dispositif de décharge (31) pour les particules de bois (19) collectées et les excréments d'animaux.

12. Dispositif selon la revendication 10,
**caractérisé en ce que**
le collecteur (28) est composé d'une bande transporteuse (32), placée sur un plan sous le rouleau de reprise en sortie (24).

13. Dispositif selon l'une des revendications 1 à 12,
**caractérisé en ce que**
plusieurs bandes de substrat (10) de support, placées l'une à côté de l'autre, traversent l'étable (1), avec sur la face supérieure la couche de particules de bois (11) saupoudrée en vrac, et sont déroulées dans la station dérouleuse (9) à partir d'un nombre correspondant de rouleaux de réserve d'entrée (12).

14. Dispositif selon l'une des revendications 8 à 13,
**caractérisé en ce que**
le dispositif de dosage (18) comprend un récipient de dosage (34) se déplaçant perpendiculairement à la longueur de la bande et pouvant être déplacé au choix dans une position de dosage située au-dessus de chacune des bandes de substrat (10).

15. Dispositif selon la revendication 13 ou 14,
**caractérisé en ce que**
les bandes de substrat (10) de la station enrouleuse (23) peuvent être respectivement enroulées sur un rouleau de reprise en sortie (24) unique, et la station enrouleuse (23) comprend un racloir (29) pour chaque rouleau de reprise en sortie (24).

16. Dispositif selon les revendications 10 et 15,
**caractérisé en ce que**
le collecteur (28) se déplace perpendiculairement au sens de la longueur des bandes de substrat (10) et est affecté comme un dispositif commun à tous les rouleaux de réserve de sortie (24).
